# FASCICULE DE BREVET EUROPEEN

(11) **EP 3 622 817 B1**
(45) Date de publication et mention de la délivrance du brevet: **28.07.2021**
(21) Numéro de dépôt: 19197172.0
(22) Date de dépôt: 13.09.2019
(51) Int. Cl.: A01M 7/00, B05B 15/00

(54) **ÉLÉMENT MODULAIRE DE BRAS DE RAMPE DE PULVÉRISATION**
MODULARES ELEMENT FÜR EIN LANDWIRTSCHAFTLICHES SPRITZGESTÄNGE
MODULAR ELEMENT FOR AN ARM OF A SPRAY BOOM

(30) Priorité: 13.09.2018 FR 1858245
(43) Date de publication de la demande: 18.03.2020
(73) Titulaire: Pommier - S.C.E.B.P., 28150 Eole-en-Beauce (FR)
(72) Inventeur: LASNE, Frédéric, 28360 MESNAY-LE-VIDAME (FR); POMMIER, Nicolas, 28150 EOLE-EN-BEAUCE (FR)
(74) Mandataire: Oudin, Stéphane

(56) Documents cités:
- EP-A1- 1 230 854
- EP-A1- 2 567 616
- WO-A1-2015/062964
- WO-A1-2015/185390
- FR-A1- 2 662 579
- SIMMELINK J G: "O, WERKT DAT ZO. \BALANCEERSYSTEMEN BIJ VELDSPUITEN", LANDBOUWMECHANISATIE, AGRIMEDIA B.V., WAGENINGEN, NL, vol. 44, no. 3, 1 mars 1993 (1993-03-01), pages 14-16, XP000348917, ISSN: 0023-7795

## Description

### Domaine technique

La présente invention se rapporte au domaine général de l'agriculture. Elle vise plus précisément un élément modulaire pour la fabrication d'un bras ou segment de bras d'une rampe de pulvérisation agricole, ainsi qu'une rampe de pulvérisation ou d'épandage granulaire ou liquide réalisée à partir d'une pluralité d'éléments modulaires.

### Technique antérieure

Dans le domaine de l'agriculture, il est connu de traiter les cultures végétales pour lutter contre les insectes, les maladies ou encore les mauvaises herbes, afin de garantir un bon rendement de l'exploitation.

Pour ce faire, on utilise, de manière classique (WO 2015/185390), un pulvérisateur porté ou trainé par un tracteur, ou encore autopropulsé, et comportant au moins :
- une cuve contenant la bouillie liquide issue du mélange de produit phytosanitaire et d'eau,
- une rampe comportant deux bras articulés de part et d'autre de ladite cuve, munis chacun de plusieurs segments aptes à être repliés sur eux-mêmes durant le déplacement sur route du pulvérisateur, et supportant des buses de pulvérisation et dépendant de la dimension de l'exploitation et du relief du terrain, et
- une pompe mettant sous pression la bouillie contenue dans la cuve et aspirant ladite bouillie pour l'envoyer vers la rampe et les buses, ladite pompe assurant un mélange homogène de la bouillie afin que sa concentration soit identique du début à la fin de la pulvérisation.

L'un des principaux inconvénients des pulvérisateurs est lié à la fabrication des bras et de leurs segments. En effet, ces derniers doivent répondre aux contraintes suivantes :
- avoir une structure avec une résistance mécanique importante notamment pour les bras et segments de grande largueur,
- accueillir l'équipement de pulvérisation (tuyauterie, portes-buses, pattes de fixation) et le protéger contre les collisions ou les accrochages avec les cultures végétales à traiter,
- permettre la mise en place des buses de pulvérisation sans interférence avec ladite structure et selon un espacement régulier afin de garantir une pulvérisation homogène de la bouillie.

Par ailleurs, ces bras et segments sont réalisés à partir de nombreux éléments qui sont classiquement des profilés extrudés, positionnés sur un gabarit puis soudés entre eux.

Cette fabrication, qui nécessite la fabrication de nombreux gabarits de soudage, est longue et coûteuse et ne permet pas vraiment d'industrialiser la fabrication de ces bras et ces segments.

Enfin, selon les pays d'exploitation de ces rampes et/ou les fabricants des buses de pulvérisation, l'espacement entre ces dernières est variable et nécessite alors un dimensionnement de la structure spécifique pour chaque espacement.

### Exposé de l'invention

Le but de la présente invention est de proposer un élément modulaire permettant de fabriquer des bras de rampe de pulvérisation ou segments de bras tout en garantissant une résistance mécanique importante quelle que soit leur largeur, en réduisant le nombre de pièces constitutives à souder entre elles, et en permettant la mise en place des buses de pulvérisation sans interférence avec ladite structure, quel que soit leur espacement.

Conformément à l'invention, il est donc proposé un élément modulaire pour la fabrication d'un bras ou d'un segment de bras d'une rampe de pulvérisation munie de buses de pulvérisation, remarquable en ce qu'il comporte au moins :
- un premier profilé déterminant un logement longitudinal ouvert vers le bas et à chacune de ses extrémités longitudinales, le premier profilé et le logement étant configurés pour accueillir entièrement les buses de pulvérisation et des tuyauteries les reliant entre elles,
- un renfort disposé au-dessus du premier profilé de manière à ce que les axes longitudinaux et du premier profilé appartiennent au plan P vertical de symétrie longitudinale dudit élément modulaire,
- une pluralité de raidisseurs reliant longitudinalement entre eux au moins le premier profilé et le renfort, et
- deux platines disposées chacune à une des extrémités longitudinales dudit premier profilé et reliant latéralement entre elles au moins les extrémités longitudinales du premier profilé et du renfort.

L'élément modulaire comporte avantageusement un deuxième profilé disposé au-dessus du renfort de sorte que son axe longitudinal appartienne audit plan P vertical, lesdits renforts reliant longitudinalement entre eux le premier profilé, le renfort et le deuxième profilé, et lesdites platines reliant latéralement entre elles les extrémités longitudinales du premier profilé, du renfort et du deuxième profilé.

Selon un mode de réalisation avantageux, le premier profilé a une section transversale en forme globale de C pivoté de 90° et comporte une âme sensiblement horizontale, deux ailes issues des bords longitudinaux de ladite âme et s'étendant vers le bas, et deux rebords issus chacun des bords longitudinaux inférieurs desdites ailes et s'étendant sensiblement horizontalement vers l'intérieur desdites ailes en étant en vis-à-vis.

Les premier et deuxième profilés sont avantageusement ajourés et comportent respectivement une pluralité de lumières.

Le renfort a de préférence une section transversale de forme globalement circulaire et est tubulaire creux débouchant à chacune de ses extrémités longitudinales.

Le renfort comporte avantageusement un orifice aménagé sous ledit renfort.

Selon un mode de réalisation avantageux, chaque platine comporte une pluralité de perçages et détermine deux faces planes parallèles entre elles et décalées l'une par rapport à l'autre et une face médiane inclinée reliant les deux faces planes entre elles, lesdites platines étant de forme complémentaire.

Les éléments constitutifs de l'élément modulaire comportent de préférence une pluralité d'orifices.

L'invention concerne également un procédé de fabrication d'un élément modulaire selon l'invention remarquable en ce que l'on procède de la manière suivante:
- fabrication des éléments constitutifs de l'élément,
- pré-assemblage de ces derniers à l'aide de boulons mis en place dans les orifices,
- soudage desdits éléments constitutifs de l'élément entre eux.

Enfin, l'invention concerne également un bras ou un segment de bras d'une rampe de pulvérisation remarquable en ce qu'il est fabriqué à partir d'au moins un élément modulaire selon invention.

### Description sommaire des figures

D'autres avantages et caractéristiques ressortiront mieux de la description qui va suivre d'un mode d'exécution d'un élément modulaire selon l'invention en référence aux figures annexées sur lesquelles :
- la figure 1 est une vue en perspective d'un élément modulaire selon l'invention ;
- la figure 2 est une vue de côté de l'élément de la figure 1 ;
- la figure 3 est une section verticale agrandie de l'élément de la figure 1 ;
- la figure 4 est une vue en perspective partielle de l'élément de la figure 1 avec des buses de pulvérisation ;
- la figure 5 est une vue en perspective éclatée d'un segment de bras réalisé à partir d'éléments semblables à celui de la figure 1 ;
- la figure 6 est une vue en perspective du segment de bras de la figure 4 ;
- la figure 7 est une vue en perspective du bras réalisé à partir du segment des figures 5 et 6 ;
- la figure 8 est une vue de détail agrandie du bras de la figure 7.

### Meilleure manière de réaliser l'invention technique

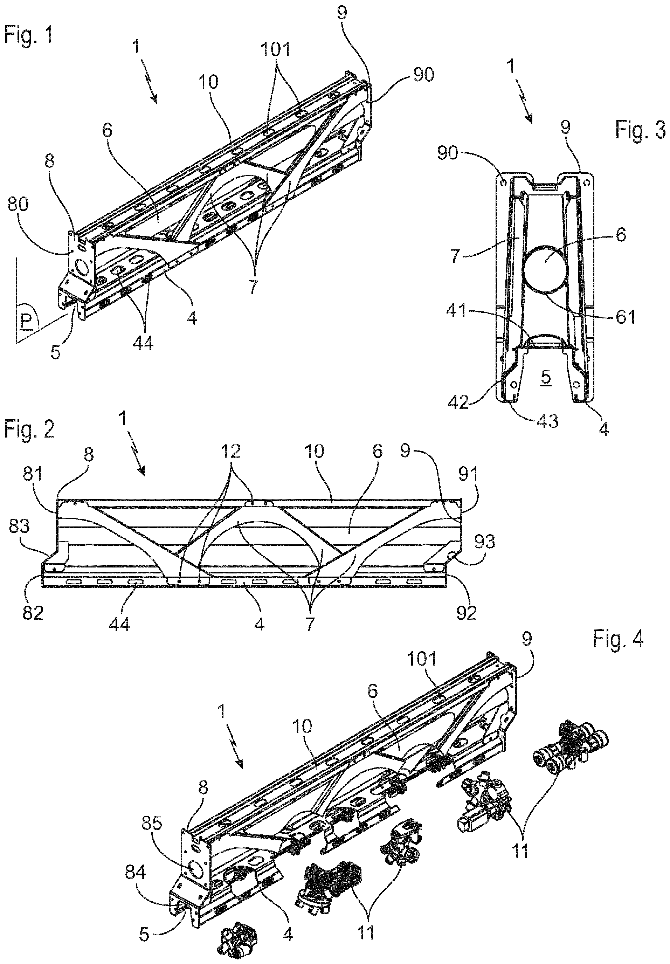

En référence aux figures 1 à 7, l'invention concerne un élément modulaire 1 pour la fabrication d'un bras 2 ou d'un segment 3 de bras 2 de rampe de pulvérisation ou d'épandage granulaire ou liquide.

Chaque élément modulaire 1 comporte au moins :
- un premier profilé 4 définissant un logement 5 longitudinal ouvert vers le bas et à chacune des extrémités longitudinales dudit premier profilé 4,
- un renfort 6 disposé au-dessus du premier profilé 4 de manière à ce que les axes longitudinaux respectifs du renfort 6 et du premier profilé 4 appartiennent au plan P vertical de symétrie longitudinale dudit élément modulaire 1 (Cf. figure 1),
- une pluralité de raidisseurs 7 reliant longitudinalement entre eux au moins le premier profilé 4 et le renfort 6, et
- deux platines 8,9 disposées chacune à une des extrémités longitudinales dudit premier profilé 4 et reliant latéralement entre elles au moins les extrémités longitudinales du premier profilé 4 et du renfort 6.

Selon un mode de réalisation avantageux, notamment pour les segments les plus sollicités mécaniquement, l'élément modulaire 1 selon l'invention comporte en outre un deuxième profilé 10 disposé au-dessus du renfort 6 de sorte que son axe longitudinal appartienne audit plan P vertical. Dans cette hypothèse, les raidisseurs 7 relient longitudinalement entre eux non seulement le premier profilé 4 et le renfort 6, mais également le deuxième profilé 10. De même, les platines 8,9 relient latéralement entre elles non seulement les extrémités longitudinales du premier profilé 4 et du renfort 6, mais également les extrémités longitudinales du deuxième profilé 10.

Le premier profilé 4 a avantageusement une section transversale en forme globale de C pivoté de 90° et comporte au moins une âme 41 sensiblement horizontale, deux ailes 42 issues des bords longitudinaux de ladite âme 41 et s'étendant vers le bas, et deux rebords 43 issus chacun des bords longitudinaux inférieurs desdites ailes 42 et s'étendant sensiblement horizontalement vers l'intérieur desdites ailes 42 en étant en vis-à-vis (Cf. figure 3).

Le premier profilé 4 pourra avoir une section transversale en forme globale de U ou de V pivoté de 180° sans sortir du cadre de la présente invention.

Le premier profilé 4 et le logement 5 sont configurés pour accueillir entièrement les buses 11 de pulvérisation et les tuyauteries, non représentées, reliant les buses 11 entre elles (Cf. figure 4).

On décrit ici un élément modulaire 1 pour la fabrication d'un bras 2 ou d'un segment 3 de bras 2 d'une rampe de pulvérisation.

Toutefois, l'élément modulaire 1 pourra être utilisé pour fabriquer un bras ou un segment de bras d'une rampe d'épandage granulaire ou liquide. Dans ce cas, on comprend bien que les buses 11 seront évidemment remplacées par des systèmes d'épandage granulaire ou liquide, et le premier profilé et le logement de l'élément modulaire seront alors configurés pour accueillir entièrement lesdits systèmes d'épandage et les tuyauteries associées.

On désigne ici par "accueillir entièrement" le fait qu'une fois en place dans le logement 5 l'ensemble buses 11 de pulvérisation - tuyauteries ne dépasse du premier profilé 4.

On comprend bien qu'avec un logement 5 dégageant un espace sur toute la longueur de l'élément modulaire l, les buses 11 de pulvérisation sont mises en place dans ledit logement 5 sans interférence avec la structure dudit élément modulaire l, quel que soit l'espacement entre les buses 11.

Par ailleurs, on comprend bien qu'une fois en place dans ledit logement 5, les buses 11 de pulvérisation sont parfaitement protégées contre les collisions ou les accrochages avec les cultures végétales à traiter, par le premier profilé 4 et notamment par ses ailes 42 et ses rebords 43.

Pour des raisons évidentes de légèreté, les premier et deuxième profilés 4,10 sont avantageusement ajourés et comportent respectivement une pluralité de lumières 44, 101.

Pour des raisons de résistance mécanique, notamment à la torsion lors des opérations de dépliage/repliage des segments 3, le renfort 6 a avantageusement une section transversale de forme globalement circulaire.

On désigne par "globalement circulaire" le fait que le renfort 6 comporte une section transversale pouvant être en forme totalement ou partiellement de cercle, d'ellipse ou de courbe plane fermée ne comportant pas d'angle droit vif.

De plus pour des raisons de légèreté, le renfort 6 est tubulaire creux débouchant à chacune de ses extrémités longitudinales. Cette configuration permet en outre de faire passer à l'intérieur dudit renfort 6 au moins un tuyau d'alimentation en produit de traitement provenant d'une cuve, non représentés. Le raccordement entre ce tuyau d'alimentation et les buses 11 de pulvérisation disposées dans ledit logement 5 de l'élément modulaire 1 est alors réalisé par au moins un tuyau de liaison, non représenté, passant simultanément dans une des lumières 44 aménagées sur l'âme 41 dudit premier profilé 4 et un orifice 61 aménagé sous ledit renfort 6, et étant raccordé au tuyau d'alimentation et à l'ensemble buses 11 de pulvérisation - tuyauteries.

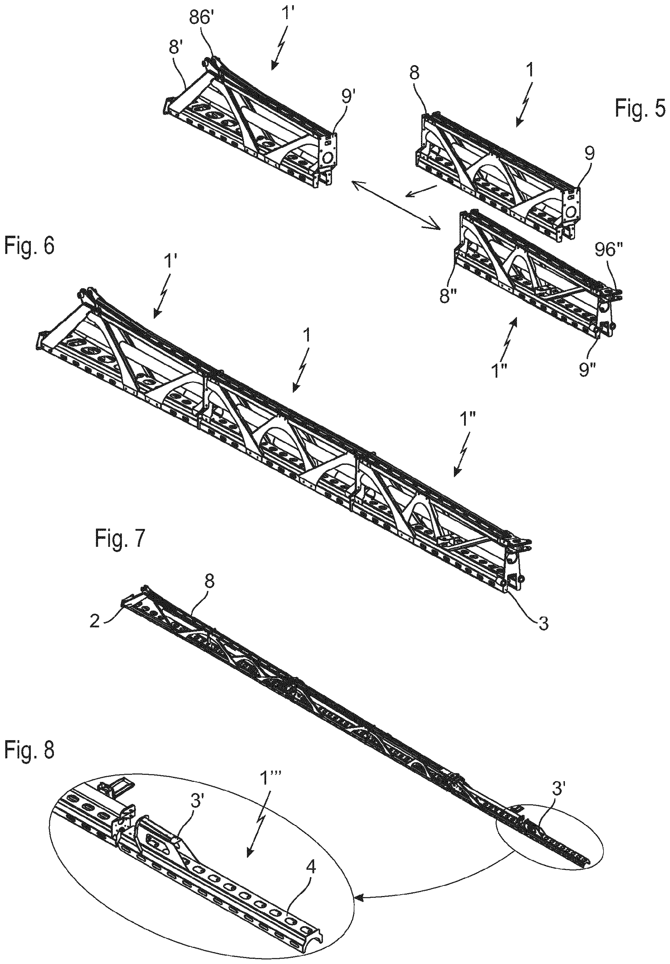

Les platines 8,9 sont configurées pour permettre d'assembler l'élément modulaire 1 par sa platine 8 avec des éléments modulaires 1',1" semblables adjacents respectivement par leur platine 9' et 8" afin de former un segment 3 d'un bras 2 de rampe de pulvérisation (Cf. figures 5 à 7).

Chaque platine 8,9,8",9' comporte une pluralité de perçages 80,90 permettant de mettre en place des boulons, non représentés, pour serrer les platines 8,9,8",9' les unes contre les autres afin d'assurer l'assemblage de l'élément modulaire 1 avec les éléments modulaires 1',1" semblables adjacents.

Pour des raisons de résistance mécanique, les platines 8,9 sont de forme complémentaire et chaque platine 8,9 détermine de préférence deux faces planes 81,82 ; 91,92 parallèles entre elles et décalées l'une par rapport à l'autre, et une face médiane 83 ; 93 inclinée reliant les deux faces planes 81,82 ; 91,92 entre elles. Cette configuration permet d'éviter que l'ensemble des contraintes mécaniques ne soit repris que par les boulons d'assemblage.

Par ailleurs, chaque platine 8,9 comporte une découpe 84 inférieure pour ne pas obturer les extrémités longitudinales du premier profilé 4 et permettre la mise en place de l'ensemble buses 11 de pulvérisation - tuyauteries.

De même, dans l'hypothèse où le renfort 6 est tubulaire creux débouchant à chacune de ses extrémités longitudinales, chaque platine 8,9 comporte une lumière 85 pour ne pas obturer les extrémités longitudinales dudit renfort 6 (Cf. figure 4).

Par ailleurs, en référence à la figure 5, on comprend bien que pour permettre le dépliage/repliage des segments 3 et/ou des bras 2, les platines 8',9" respectives des éléments modulaires 1',1" situées aux extrémités longitudinales du segment 3 pourront être différentes de celles précédemment décrites et comporter au moins des parties 86',96" d'articulations.

L'Homme du Métier n'aura aucune difficulté pour concevoir lesdites articulations et parties 86',96".

Les éléments constitutifs de l'élément modulaire 1 (à savoir le premier profilé 4, le renfort 6, les raidisseurs 7, les deux platines 8,9 et, le cas échéant, le deuxième profilé 10) sont avantageusement des pièces métalliques, de préférence en l'aluminium, obtenues par découpage, pliage, étirage ou encore extrusion.

Ces éléments constitutifs de l'élément modulaire 1 comportent une pluralité d'orifices 12 aptes à recevoir des boulons, non représentés, pour les assembler avant l'opération de soudage afin d'éviter de fabriquer et d'utiliser des gabarits de soudage.

Ainsi, pour fabriquer un élément modulaire 1 selon l'invention, on procède de la manière suivante :
- fabrication des éléments constitutifs de l'élément modulaire 1,
- pré-assemblage de ces derniers à l'aide de boulons mis en place dans les orifices 12,
- soudage desdits éléments constitutifs de l'élément modulaire 1 entre eux,
- retrait éventuel des boulons après soudage.

On comprend bien l'étape de pré-assemblage par boulons permet un passage direct à la soudure sans utilisation de gabarit, ni d'étape de pointage et donc une automatisation de l'étape de soudure.

Par ailleurs, avec la configuration décrite, l'élément modulaire 1 selon l'invention est symétrique, et peut être utilisé pour fabriquer un segment 3 du bras 2 droit ou gauche d'une rampe de pulvérisation.

De plus, on a décrit ici un bras comportant trois segments, chaque segment étant composé de deux ou trois éléments modulaires. Toutefois, il va de soi que le nombre de segments par bras et le nombre d'éléments modulaires par segment pourra varier sans sortir du cadre de la présente invention.

Enfin, en référence aux figures 7 et 8, on comprend bien que l'élément modulaire 1''' constituant le segment 3' situé à l'extrémité libre du bras 2 est beaucoup moins sollicité que les autres segments. Par conséquent, cet élément modulaire 1''' est avantageusement allégé afin de limiter son coût. Ainsi, il pourra ne comporter que le premier profilé 4.

### Possibilité d'application industrielle

L'élément modulaire 1 selon l'invention s'applique à la réalisation de bras ou segments de bras de tout type de rampe de pulvérisation ou d'épandage et pas uniquement des rampes de pulvérisation en aluminium.

Enfin, il va de soi que les exemples d'éléments modulaires 1 conformes à l'invention qui viennent d'être décrits ne sont que des illustrations particulières, en aucun cas limitatives de l'invention.

## Revendications

1. Elément modulaire (1,1',1") pour la fabrication d'un bras (2) ou d'un segment (3) de bras (2) d'une rampe de pulvérisation munie de buses (11) de pulvérisation, comportant au moins:
- un premier profilé (4) déterminant un logement (5) longitudinal ouvert vers le bas et à chacune de ses extrémités longitudinales, le premier profilé (4) et le logement (5) étant configurés pour accueillir entièrement les buses (11) de pulvérisation et des tuyauteries les reliant entre elles,
- un renfort (6) disposé au-dessus du premier profilé (4) de manière à ce que les axes longitudinaux respectifs du renfort (6) et du premier profilé (4) appartiennent au plan P vertical de symétrie longitudinale dudit élément modulaire (1,l',1"),
- une pluralité de raidisseurs (7) reliant longitudinalement entre eux au moins le premier profilé (4) et le renfort (6), l'elément modulaire (1, 1', 1") **caractérisé en ce qu'**il comporte
- deux platines (8,9,8',9',8",9") disposées chacune à une des extrémités longitudinales dudit premier profilé (4) et reliant latéralement entre elles au moins les extrémités longitudinales du premier profilé (4) et du renfort (6).

2. Elément modulaire (1,1',1") selon la revendication 1 **caractérisé en ce qu'**il comporte un deuxième profilé (10) disposé au-dessus du renfort (6) de sorte que son axe longitudinal appartienne audit plan P vertical et **en ce que** lesdits renforts (7) relient longitudinalement entre eux le premier profilé (4), le renfort (6) et le deuxième profilé (10), et lesdites platines (8,9,8',9',8",9") relient latéralement entre elles les extrémités longitudinales du premier profilé (4), du renfort (6) et du deuxième profilé (10).

3. Elément modulaire (1,1',1") selon l'une quelconque des revendications 1 ou 2 **caractérisé en ce que** le premier profilé (4) a une section transversale en forme globale de C pivoté de 90° et comporte une âme (41) sensiblement horizontale, deux ailes (42) issues des bords longitudinaux de ladite âme (41) et s'étendant vers le bas, et deux rebords (43) issus chacun des bords longitudinaux inférieurs desdites ailes (42) et s'étendant sensiblement horizontalement vers l'intérieur desdites ailes (42) en étant en vis-à-vis.

4. Elément modulaire (1,1',1") selon l'une quelconque des revendications 2 ou 3, **caractérisé en ce que** les premier et deuxième profilés (4,10) sont ajourés et comportent respectivement une pluralité de lumières (44, 101).

5. Elément modulaire (1,1',1") selon l'une quelconque des revendications 1 à 4, **caractérisé en ce que** le renfort (6) a une section transversale de forme globalement circulaire et est tubulaire creux débouchant à chacune de ses extrémités longitudinales.

6. Elément modulaire (l,l',1") selon la revendication 5, **caractérisé en ce que** le renfort (6) comporte un orifice (61) aménagé sous ledit renfort (6).

7. Elément modulaire (1,1',1") selon l'une quelconque des revendications 1 à 6, **caractérisé en ce que** chaque platine (8,9) comporte une pluralité de perçages (80,90) et détermine deux faces planes (81,82 ; 91,92) parallèles entre elles et décalées l'une par rapport à l'autre et une face médiane (83 ; 93) inclinée reliant les deux faces planes (81,82 ; 91,92) entre elles, lesdites platines (8,9) étant de forme complémentaire.

8. Elément modulaire (1,1',1") selon l'une quelconque des revendications 1 à 4, **caractérisé en ce que** les éléments constitutifs de l'élément modulaire (l,l',1") comportent une pluralité d'orifices (12).

9. Procédé de fabrication d'un élément modulaire (l,l',1") selon la revendication 8, **caractérisé en ce que** l'on procède de la manière suivante :
- fabrication des éléments constitutifs de l'élément modulaire (1,1',1"),
- pré-assemblage de ces derniers à l'aide de boulons mis en place dans les orifices (12),
- soudage desdits éléments constitutifs de l'élément modulaire (1,1',1") entre eux.

10. Bras (2) ou segment (3) de bras (2) d'une rampe de pulvérisation **caractérisé en ce qu'**il est fabriqué à partir d'au moins un élément modulaire (1,l',1") selon l'une quelconque des revendications 1 à 8.

## Patentansprüche

1. Modulares Element (1, 1', 1") für die Herstellung eines Arms (2) oder eines Segments (3) eines Arms (2) eines mit Spritzdüsen (11) ausgestatteten Spritzgestänges, das mindestens aufweist:
- ein erstes Profil (4), das eine nach unten und an jedem ihrer Längsenden offene Aufnahme (5) bestimmt, wobei das erste Profil (4) und die Aufnahme (5) ausgelegt sind, um die Sprühdüsen (11) und die Rohrleitungen, die sie miteinander verbinden, vollständig aufzunehmen,
- eine Verstärkung (6), die über dem ersten Profil (4) derart angeordnet ist, dass die jeweiligen Längsachsen der Verstärkung (6) und des ersten Profils (4) zur vertikalen Längssymmetrieebene P des modularen Elements (1, 1', 1") gehören,
- eine Vielzahl von Versteifungen (7), die mindestens das erste Profil (4) und die Verstärkung (6) längs miteinander verbinden, wobei das modulare Element (1, 1', 1") **dadurch gekennzeichnet, dass** es aufweist
- zwei Platten (8, 9, 8', 9', 8", 9"), die jeweils an einem der Längsenden des ersten Profils (4) angeordnet sind und mindestens die Längsenden des ersten Profils (4) und der Verstärkung (6) seitlich miteinander verbinden.

2. Modulares Element (1, 1', 1") nach Anspruch 1, **dadurch gekennzeichnet, dass** es ein zweites Profil (10) aufweist, das über der Verstärkung (6) derart angeordnet ist, dass seine Längsachse zur vertikalen Ebene P gehört und dass die Verstärkungen (7) das erste Profil (4), die Verstärkung (6) und das zweite Profil (10) längs miteinander verbinden und die Platten (8, 9, 8', 9', 8", 9") die Längsenden des ersten Profils (4), der Verstärkung (6) und des zweiten Profils (10) seitlich miteinander verbinden.

3. Modulares Element (1, 1', 1") nach einem der Ansprüche 1 oder 2, **dadurch gekennzeichnet, dass** das erste Profil (4) einen allgemein C-förmigen, um 90° geschwenkten Querschnitt hat und einen etwa horizontalen Kern (41) aufweist, zwei von den Längsrändern des Kerns (41) abgehende Flügel (42) und die sich nach unten erstrecken, und zwei von jedem der unteren Längsränder der Flügel (42) abgehende Kanten (43) und die sich etwa horizontal zum Inneren der Flügel (42) erstrecken, wobei sie sich dabei gegenüberliegen.

4. Modulares Element (1, 1', 1") nach einem der Ansprüche 2 oder 3, **dadurch gekennzeichnet, dass** das erste und zweite Profil (4, 10) durchbrochen ist und jeweils eine Vielzahl von Durchbrüchen (44, 101) aufweist.

5. Modulares Element (1, 1', 1") nach einem der Ansprüche 1 bis 4, **dadurch gekennzeichnet, dass** die Verstärkung (6) einen allgemein kreisförmigen Querschnitt hat und an jedem ihrer Längsenden ausmündend rohrförmig hohl ist.

6. Modulares Element (1, 1', 1") nach Anspruch 5, **dadurch gekennzeichnet, dass** die Verstärkung (6) eine unter der Verstärkung (6) eingerichtete Öffnung (61) aufweist.

7. Modulares Element (1, 1', 1") nach einem der Ansprüche 1 bis 6, **dadurch gekennzeichnet, dass** jede Platte (8, 9) eine Vielzahl von Bohrungen (80, 90) aufweist und zwei ebene Flächen (81, 82; 91, 92) bestimmt, die parallel zueinander und in Bezug zueinander versetzt sind und eine geneigte mittlere Fläche (83; 93), die die zwei ebenen Flächen (81, 82; 91, 92) miteinander verbindet, wobei die Platten (8, 9) komplementär geformt sind.

8. Modulares Element (1, 1', 1") nach einem der Ansprüche 1 bis 4, **dadurch gekennzeichnet, dass** die Elemente, die das modulare Element (1, 1', 1") bilden, eine Vielzahl von Öffnungen (12) aufweisen.

9. Verfahren zur Herstellung eines modularen Elements (1, 1', 1") nach Anspruch 8, **dadurch gekennzeichnet, dass** in folgender Weise vorgegangen wird:
- Herstellen der Elemente, die das modulare Element (1, 1', 1") bilden,
- Vormontieren derselben mit Hilfe von Bolzen, die in die Öffnungen (12) eingesetzt werden,
- miteinander Verschweißen der das modulare Element (1, 1', 1") bildenden Elemente.

10. Arm (2) oder Segment (3) eines Arms (2) eines Spritzgestänges, **dadurch gekennzeichnet, dass** er/es aus mindestens einem modularen Element (1, 1', 1") nach einem der Ansprüche 1 bis 8 hergestellt ist.

## Claims

1. Modular element (1, 1', 1") for the manufacturing of an arm (2) or of an arm (2) segment (3) of a spray bar provided with spray nozzles (11), comprising at least:
- a first profile (4) determining a longitudinal housing (5) open downwards and at each of its longitudinal ends, the first profile (4) and the housing (5) being configured to entirely receive the spray nozzles (11) and pipings connecting them to each other,
- a reinforcement (6) disposed above the first profile (4) in such a way that the respective longitudinal axes of the reinforcement (6) and of the first profile (4) belong to the vertical plane P of longitudinal symmetry of said modular element (1, 1', 1"),
- a plurality of stiffeners (7) longitudinally connecting at least the first profile (4) and the reinforcement (6) to each other, the modular element (1, 1', 1") **characterized in that** it comprises
- two plates (8, 9, 8', 9', 8", 9") each disposed at one of the longitudinal ends of said first profile (4) and laterally connecting at least the longitudinal ends of the first profile (4) and of the reinforcement (6) to each other.

2. Modular element (1, 1', 1") according to claim 1, **characterized in that** it comprises a second profile (10) disposed above the reinforcement (6) in such a way that its longitudinal axis belongs to said vertical plane P and **in that** said reinforcements (7) longitudinally connect the first profile (4), the reinforcement (6) and the second profile (10) to each other, and said plates (8, 9, 8', 9', 8", 9") laterally connect the longitudinal ends of the first profile (4), of the reinforcement (6) and of the second profile (10) to each other.

3. Modular element (1, 1', 1") according to any one of claims 1 or 2, **characterized in that** the first profile (4) has a transverse cross-section in the overall shape of a C pivoted by 90° and comprises a substantially horizontal core (41), two flanges (42) coming from the longitudinal edges of said core (41) and extending downwards, and two lips (43) each coming from the lower longitudinal edges of said flanges (42) and extending substantially horizontally towards the inside of said flanges (42) while facing each other.

4. Modular element (1 ,1', 1") according to any one of claims 2 or 3, **characterized in that** the first and second profiles (4, 10) are perforated and respectively comprise a plurality of holes (44, 101)

5. Modular element (1, 1', 1") according to any one of claims 1 to 4, **characterized in that** reinforcement (6) has a transverse cross-section having a generally circular shape and is hollow tubular opening at each of its longitudinal ends.

6. Modular element (1, 1', 1") according to claim 5, **characterized in that** the reinforcement (6) comprises an orifice (61) made under said reinforcement (6).

7. Modular element (1,1',1") according to any one of claims 1 to 6, **characterized in that** each plate (8, 9) comprises a plurality of piercings (80, 90) and determines two flat faces (81, 82; 91, 92) parallel to each other and offset with respect to one another and an inclined median face (83; 93) connecting the two flats (81, 82; 91, 92) to each other, said plates (8, 9) having a complementary shape.

8. Modular element (1,1',1") according to any one of claims 1 to 4, **characterized in that** the component elements of the modular element (1, 1', 1") comprise a plurality of orifices (12).

9. Method for manufacturing a modular element (1, 1', 1") according to claim 8, **characterized in that** the following is carried out:
- manufacturing of the component elements of the element (1, 1', 1"),
- preassembly of said component elements using bolts put in place in the orifices (12),
- welding of said component elements of the element (1, 1', 1") to each other.

10. Arm (2) or of an arm (2) segment (3) of a spray bar **characterized in that** it is manufactured from at least one modular element (1, 1', 1") according to any one of claims 1 to 8.
